**Europäisches Patentamt**

**European Patent Office**

**Office européen des brevets**

(11) Veröffentlichungsnummer: **0 247 340**
**A1**

# EUROPÄISCHE PATENTANMELDUNG

(21) Anmeldenummer: **87105172.8**

(22) Anmeldetag: **08.04.87**

(51) Int. Cl.⁴: **G 01 N 27/26, B 01 L 3/02, B 01 D 43/00, B 01 D 21/32**

(30) Priorität: **17.05.86 DE 3616728**

(43) Veröffentlichungstag der Anmeldung: **02.12.87 Patentblatt 87/49**

(84) Benannte Vertragsstaaten: **CH FR GB IT LI**

(71) Anmelder: **GESELLSCHAFT FÜR STRAHLEN- UND UMWELTFORSCHUNG M.B.H., Ingolstädter Landstrasse 1 Post Oberschleissheim, D-8042 Neuherberg (DE)**

(72) Erfinder: **Jahnke, Klaus-Dieter, Dr., Nikolausberger Weg 84, D-3400 Göttingen (DE)**
Erfinder: **Prell, Herrmann Heinrich, Dr., Im Kleinen Feld 15, D-3401 Waake-Bösinghausen (DE)**

(74) Vertreter: **Gottlob, Peter, Kernforschungszentrum Karlsruhe GmbH Stabs. Patente und Lizenzen Weberstrasse 5, D-7500 Karlsruhe 1 (DE)**

(54) **Verfahren und Vorrichtung zur Isolierung von Fraktionen von Makromolekülen aus Dichtegradienten.**

(57) Die Erfindung betrifft ein Verfahren zur Isolierung von Fraktionen von Makromolekülen, die in einem Dichtegradienten in Banden aufgetrennt wurden, mittels einer Abziehhilfe, die in den Bereich der jeweils abzutrennenden Bande in den Gradienten verbracht wird sowie eine Vorrichtung zur Durchführung desselben.

Die Aufgabe der Erfindung besteht darin, das e.g. Verfahren derart zu verbessern, daß die schnelle und effektive Präparation von z.B. fluoreszierenden Nukleinsäurebanden aus Dichtegradienten oder die Präparation anderer Substanzen aus anderen Dichtegradienten, die die visuelle Lokalisation der getrennten Substanzen gestatten, ermöglicht wird.

Die Lösung ist dadurch gekennzeichnet, daß die pipettenförmig ausgebildete Abziehhilfe relativ zur Bande bewegt wird und die Stellung der Abziehhilfe bezüglich der Bande optisch festgestellt wird.

EP 0 247 340 A1

Beschreibung:

Die Erfindung betrifft ein Verfahren zur Isolierung von Fraktionen von Makromolekülen, die in einem Dichtegradienten in Banden aufgetrennt wurden, mittels einer Abziehhilfe, die in den Bereich der jeweils abzutrennenden Bande in den Gradienten verbracht wird sowie eine Vorrichtung zur Durchführung desselben.

Zur Fraktionierung von Dichtegradienten sind verschiedene Apparaturen bekannt, die vorwiegend zur analytischen Fraktionierung (z. B. Elutionsdiagramme) der Gradienten benötigt werden. Zur präparativen Gewinnung von DNA wird allgemein die Methode von Maniatis et al (1982, A Laboratory manual, Cold Spring Harbor Laboratory, USA) angewandt. Bei dieser "Abtropfmethode" wird der CsCl-Gradient nach UV-Lichtlokali- sierung der fluoreszierenden DNA-Bande mit einer Nadel seitlich angestochen und abgetropft. Es besteht auch die Möglichkeit, die Bande mit Hilfe einer Spritze abzusaugen.

Die von Maniatis beschriebene "Abtropfmethode" wird allgemein zur Präparation bakterieller Plasmide verwendet, ist aber kaum einsetzbar zur Fraktionierung eukaryontischer DNA, die im Gegensatz zu Plasmid-DNA oft in mehreren, dicht nebeneinander liegenden Banden auftritt. Beim Anstechen des Gradienten werden Mitochondrien-, Satelliten-DNA und Kern- DNA sehr leicht vermischt, weil die Nadelspitze nur schlecht sichtbar ist. Außerdem führt diese Methodik zur Zerstörung, wertvoller wiederverwendbarer Zentrifugenröhrchen.

Alle anderen verwendeten Apparaturen zur Gradientenfraktionierung sind relativ aufwendig konstruiert. Die Prozeduren sind langwierig und lohnen in der Regel nur für analytische Zwecke (z. B. GC-Wertbestimmung aus Elutionsdiagrammen). Die Fraktionierung einer größeren Gradientenzahl ist in der Regel nicht ohne erheblichen finanziellen und zeitlichen Aufwand möglich (Aufbau und Reinigung der Apparatur).

Als wie bedeutungsvoll sich die Isolation von DNA-Banden unterschiedlicher Dichte erweist, zeigt das Beispiel der Auftrennung enkaryontischer DNA in einem CsCl-Dichtegradienten in mehrere Fraktionen. Diese DNA-Banden besitzen unterschiedliche Anteile an den Basen G und C (Guanin und Cytosin). Der GC-Gehalt (Mol-%) kann als erster Anhaltspunkt für Verwandtschaftsbeziehungen ebenso wie für funktionelle Eigenschaften der DNA angesehen werden. Ein weiterer, wesentlich differenzierter Beweis einer engen Verwandtschaft verschiedener Pilzspecies stellt dann der Vergleich der DNA-Restriktionskarten von DNA-Banden gleicher Dichte dar. Umgekehrt ist das Auffinden weitgehend gleicher Restriktionskarten bei sehr eng verwandten Pilzspecies ein sicherer Hinweis auf die Reinheit der miteinander verglichenen DNA-Präparationen.

Das Hauptproblem bei derartigen Vergleichen zwischen verschiedenen DNA-Banden ist deren Reinheit. Diese hängt entscheidend davon ab, mit welcher Genauigkeit bzw. Ausschließlichkeit man die einzelnen Banden aus dem Dichtegradienten entnehmen kann - nämlich ohne Kontamination mit evtl. sehr nahe darüber oder darunter liegenden DNA-Banden.

Die Aufgabe der Erfindung besteht darin, das e. g. Verfahren derart zu verbessern, daß die schnelle und effektive Präparation von z. B. fluoreszierenden Nukleinsäurebanden aus Dichtegradienten oder die Präparation anderer Substanzen aus anderen Dichtegradienten, die die visuelle Lokalisation der getrennten Substanzen gestatten, ermöglicht wird.

Die Lösung ist in den kennzeichnenden Merkmalen des Anspruches 1 beschrieben.

Die übrigen Ansprüche geben vorteilhafte Weiterbildungen des erfindungsgemäßen Verfahrens sowie Vorrichtungen zur Durchführung desselben wieder.

Das erfindungsgemäße Verfahren und der hierzu entwickelte Gradientensammler ermöglichen die schnelle und effektive Abtrennung fluoreszierender Nukleinsäurebanden aus Dichtegradienten. Sie sind z. B. universell einsetzbar zur Entfernung von bakteriellen Plasmiden aus ethidiumbromidhaltigen CsCl-Gradienten sowie zur Fraktionierung eukaryontischer Kern-, Mitochondien- oder Satelliten-DNA aus CsCl-Gradienten, die Bisbenzimid, Diaminophenylindol oder andere an Nukleinsäuren bindende Fluoreszenzfarbstoffe enthalten. Die Präparation anderer sichtbarer Substanzen aus anderen Dichtegradienten (z. B. braune Proteinbanden aus Saccharosegradienten) ist ebenfalls mit dem Gradientensammler möglich.

Insbesondere ist es mit der Erfindung möglich, Nukleinsäurebanden aus einem Dichtegradienten nach Lokalisation durch UV-Lichteinstrahlung zu isolieren. Mit Hilfe der erfindungsgemäßen Apparatur wird z. B. eine Pasteurpipette von oben in den Gradienten gebracht, indem das Zentrifugenröhrchen, das auf einem regulierbaren Niveautisch fixiert ist, angehoben wird. Die Spitze der Pasteurpipette ist gut sichtbar, weil sie mit einem speziellen fluoreszierenden Lack markiert wurde. Die Pasteurpipette ist über einen Schlauch mit einer Mikropipettierhilfe verbunden. Während des Anhebens des Zentrifugenröhrchens wird zunächst Luft in die Pipette hineingedrückt. Dies verhindert das Eindringen von Gradientenflüssigkeit. Die luftgefüllte Pipette wird in der Nähe der Zentrifugenwandung im unteren Teil der abzuziehenden Nukleinsäurebande positioniert und die Bande abgesaugt. Der Vorgang kann mehrmals wiederholt werden, ohne daß der Gradient vermischt wird. Die Pasteuerpipetten werden nach Gebrauch meist verworfen.

Ein wesentlicher Vorteil der Erfindung besteht in der kontrollierten, durch mechanische Hilfen unterstützten Einführung einer fluoreszierenden Glaspipette von oben in einen präparativen Dichtegradienten, der fluoreszierende Nukleinsäuren enthält. Die exakte Positionierung der Pipette und damit die gezielte Entfernung sehr eng zusammenliegender Banden wird bei geringem apparativen Aufwand innerhalb weniger Minuten ermöglicht. Die preiswerten fluoreszierenden Pasteurpipetten brauchen als Einwegartikel nach Gebrauch nicht gereinigt zu werden. Wertvolle wiederverwendbare Zentrifugenröhrchen werden bei der Fraktionierung der Gradienten nicht zerstört.

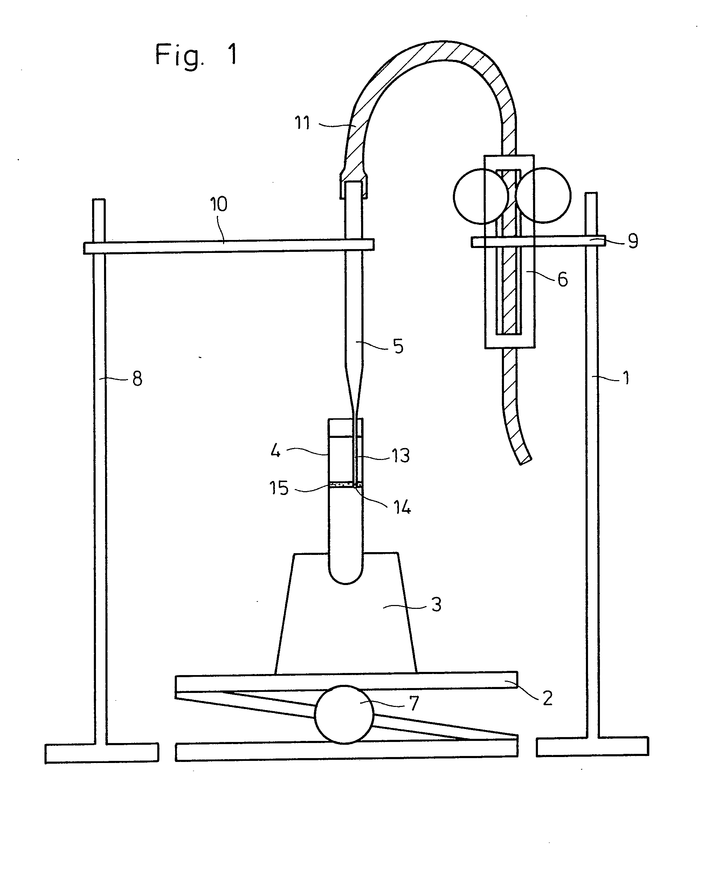

Die Erfindung wird im folgenden anhand eines Ausführungsbeispiels für eine Vorrichtung zur Durchführung des Verfahrens und Anwendungsbeispielen mittels der Figuren 1 bis 5 näher erläutert.

Der Gradientensammler gemäß der schematischen Figur 1 weist einen regulierbaren Niveautisch 2 mit Feintrieb 7, zwei Metallstative 1, 8 mit Klemmen 9 und 10 zur Halterung der Pasteurpipette 5 bzw. der Mikropipettierhilfe 6 mit Silikonschlauchverbindung zur Pasteurpipette 5, einen Gummistopfen 3 mit Ausnehmung zur Aufnahme des aufrecht gestellten Zentrifugenröhrchens 4 (Durchmesser ca. 5,5 cm, Höhe ca. 4 cm) sowie die Pasteurpipette 5 mit einer fluoreszierfähigen Markierung 14 an ihrer Spitze 13 aus Nitrozelluloselack und Rhodamin 6 G auf. Eine Bande 15 ist angedeutet.

Die Markierung 14 der Spitze 13 der Pasteurpipetten 4 mit
fluoreszierendem Nitrozelluloselack erfolgt folgendermaßen:

1 ml Nitrozelluloselack werden mit 2 mg Rhodamin 6 G solange
geschüttelt, bis sich der Farbstoff vollständig gelöst hat.
In einer sterilen Werkbank werden nun sterile Pasteurpipetten 4 an ihrer Spitze 13 etwa 5 mm von außen lackiert. Der
Lack wird mit einer zweiten sterilen Pasteurpipette aufgetragen. Die Pipetten 4 werden etwa eine Stunde getrocknet
und dann mit der Spitze 13 etwa eine Stunde in steriles
destilliertes Wasser gestellt. Die Pipetten 4 werden dann
ein zweites Mal getrocknet und in einem sterilen verschließbaren Gefäß aufbewahrt. Übermäßiges Wässern der Pipettenspitzen 13 führt zur Ablösung des Lackes.

Die Fraktionierung des Gradienten wird folgendermaßen durchgeführt:

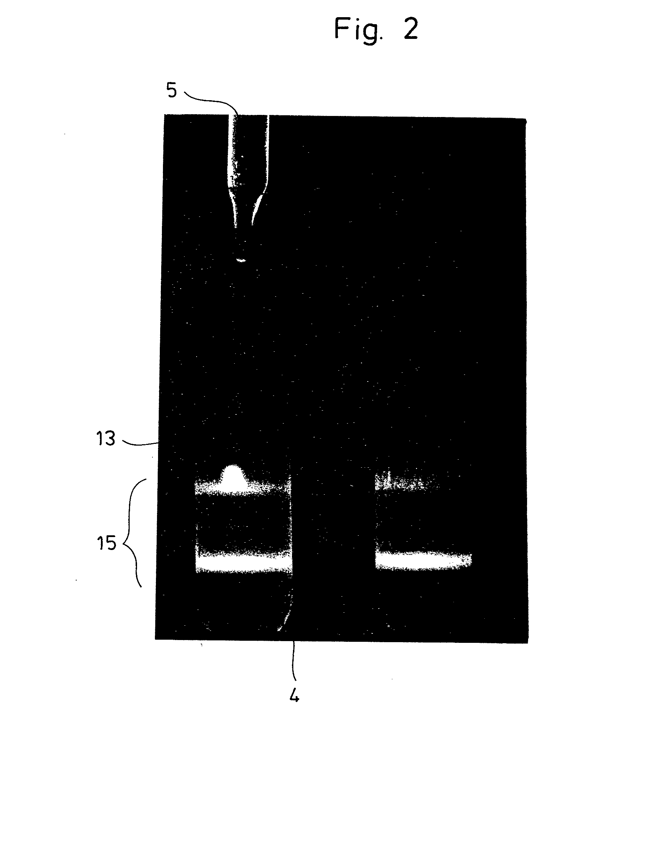

Der Gradientensammler wird wie in Figur 1 gezeigt zusammengebaut. Pipette 4 und Pipettierhilfe 6 müssen luftdicht
verbunden sein. Das Zentrifugenröhrchen 4 wird geöffnet und
nach Entfernung des Paraffinöls in den dafür vorgesehenen
Gummistopfen 3 gesteckt. Der Niveautisch 2 wird heruntergedreht, das Zentrifugenröhrchen 4 mit Gummistopfen 3 auf die
Tischfläche gesetzt. Der Raum wird verdunkelt und eine UV-
Beleuchtung eingeschaltet (Schutzbrille, Dunkeladaption).
Mit der Hand wird das Zentrifugenröhrchen 4 durch Drehung
der Höhenregulierung 7 angehoben. Sobald die leuchtende
Pipettenspitze 13, 14 die Flüssigkeit erreicht hat, wird mit
der Pipettierhilfe 6 vorsichtig Luft in die Pipette 5 hineingedrückt, um das Eindringen von Gradientenflüssigkeit zu
verhindern. Im oberen Teil des Gradienten dürfen Luftblasen
aus der Pipette 5 entweichen, nicht jedoch in der Nähe einer
DNA-Bande 15. Die Pipettenspitze 13 wird in der Nähe der Wandung des Zentrifugenröhrchens 4 an der unteren Grenze der DNA-Bande 15 positioniert, wie es in Figur 2 verdeutlicht ist. Die DNA 15 wird jetzt langsam abgesaugt bis nur noch eine schwache Fluoreszenz zurückbleibt oder die Pipettenspitze 13 sich einer anderen DNA-Bande auf etwa 1 mm genähert hat. Das Zentrifugenröhrchen 4 wird nun langsam abgesenkt und die DNA aus der Pipette 5 in ein anderes Gefäß überführt. Beim Absenken des Gradienten können geringe Mengen DNA aus der Pipette 5 entweichen, der Gradient sollte daher stets von oben nach unten fraktioniert werden. Der Vorgang kann mehrmals wiederholt werden, ohne daß der Gradient vermischt wird. Die Pipette 5 wird jeweils nach Abziehen einer Bande verworfen.

Insbesondere wurden mit dem erfindungsgemäßen Gradientensammler zwei Fraktionierungen erfolgreich durchgeführt und zwar die Auftrennung der Gesamt-DNA eines Pilzes in Fraktionen verschiedener Dichte und der Vergleich der erhaltenen DNA-Fraktionen bei zwei verschiedenen Arten der Gattung Phytophthora.

Hierzu erfolgte eine Vorbereitung:

Gefriergetrocknetes Myzel von P. infestans P 1,4, und P. parasitica DSM 1829 wurde mit Seesand zermörsert, mit Puffer extrahiert und die Nukleinsäuren aus dem Rohextrakt mit Cetyltrimethylammoniumbromid (=CTAB) selektiv gefällt. Die gefällten Nukleinsäuren wurden nach der Entfernung von CTAB aufgelöst und mit Proteinase K und Ribonuklease behandelt. So erhaltene Gesamt-DNA wurde mit CsCl-Bisbenzimid-Dichte-Gradienten in Fraktionen verschiedener Dichte (nDNA, satDNA, mtDNA) aufgetrennt. Die DNA-Banden wurden mit Hilfe des neuen Gradientensammlers jeweils einzeln aus dem Dichtegradienten entfernt und durch Restriktionsverdauung analysiert, sowie einzelne Banden gegen eine Probe von rDNA aus Saccha-

romyces cerevisiae (pMY 60.1, KLOOTWIJK) hybridisiert. Die GC-Werte der Kern-DNAs wurden durch spektrophotometrische Messung der DNA-Schmelzkurven bestimmt.

Die Ergebnisse sind folgende:

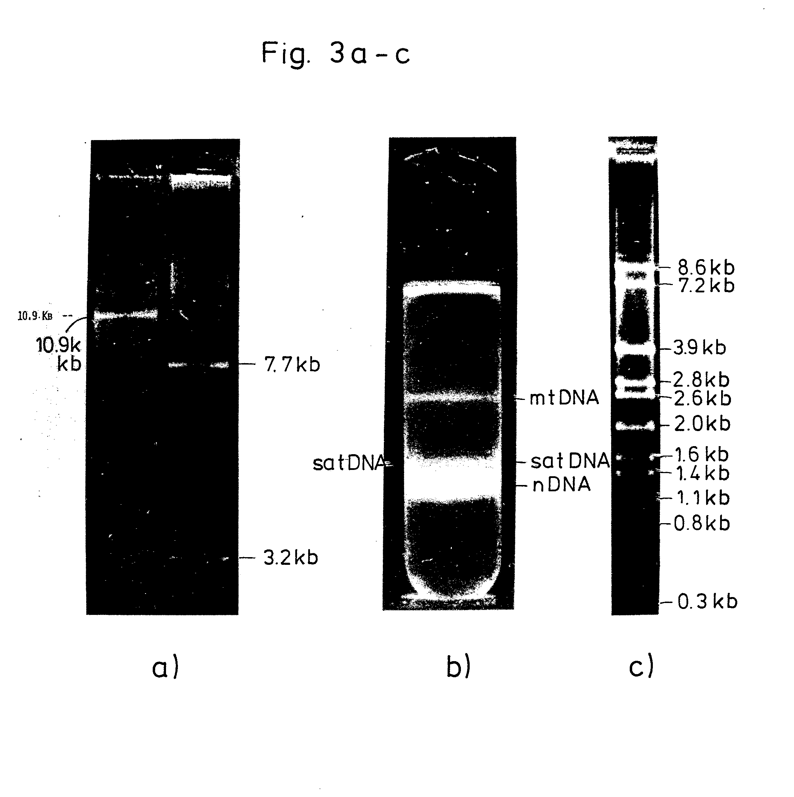

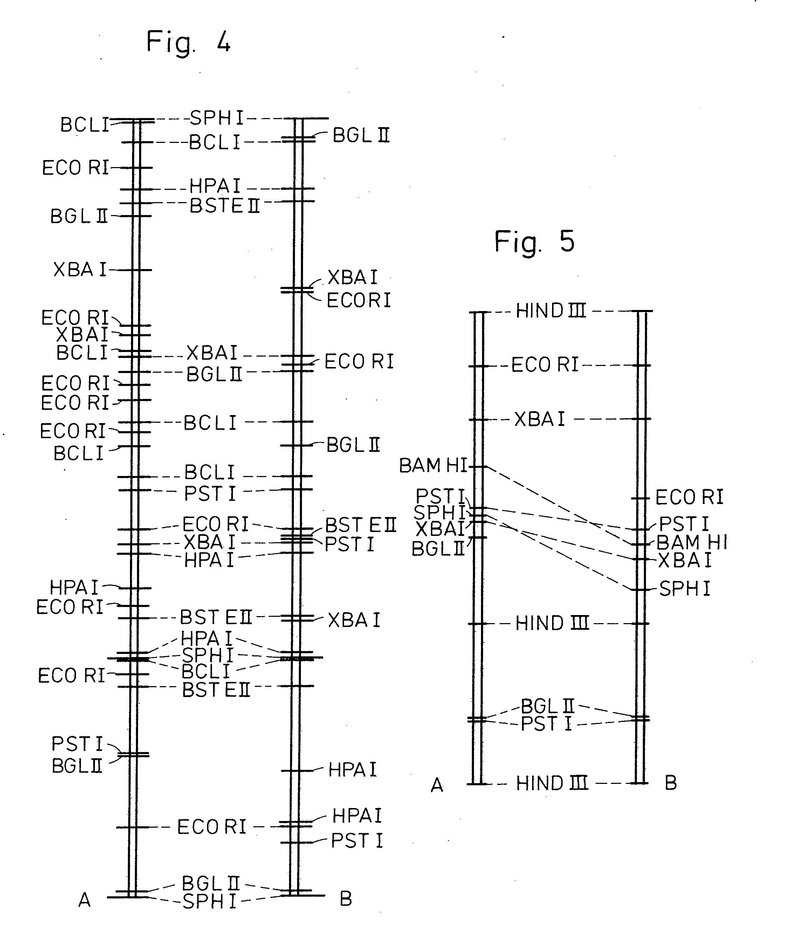

Die Gesamt-DNA von P. infestans und P. parasitica ließ sich aus CsCl-Bisbenzimid-Dichtegradienten mit dem neu entwickelten Gradientensammler klar in drei Fraktionen (Fig. 3a) auftrennen, nämlich mitochondriale DNA (=mtDNA), Satelliten-DNA (=satDNA) und Kern-DNA (=nDNA). Obwohl die Banden der satDNA und der nDNA sehr nahe beieinander liegen, zeigten die folgenden Restriktionsanalysen (Fig. 3b und c), daß die jeweils isolierte Bande kaum nennenswerte Kontamination mit der DNA der benachbarten Bande aufwies. Die mtDNAs beider Pilze waren gleichgroß (36 kb), ihre Restriktionskarten (Fig. 4) waren zu 60 % identisch (8 verschiedene Restriktionsenzyme). Die satDNA-Banden von P. infestans und P. parasitica ergaben bei Verdauung mit dem Restriktionsenzym Bam HI jeweils gleichgroße Restriktionsfragmente von etwa 11 kb, was die Identifizierung als eine Repeat-Einheit nahelegt. Sie enthielt rDNA (Southern-Hybridisierung). Die Hind III-Verdauung der satDNA von P. infestans und P. parasitica ergab je zwei Fragmente von 3,6 kb und 7,2 kb, die bei beiden Spezies identische (3,6 kb-Fragment) oder weitgehend identische (7,2 kb-Fragment; Fig. 5) Restriktionsmuster zeigten. Die GC-Werte der Kern-DNAs beider untersuchter Pilze waren identisch und betrugen 54,0 Mol-%.

Die Gesamt-DNAs von P. infestans und P. parasitica waren in allen untersuchten Eigenschaften sehr ähnlich: Molekülgrößen und Restriktionskarten der mtDNAs, Größen der r-DNA-Repeat-Einheiten und der GC-Werte der Kern-DNAs.

Die ribosomale DNA ließ sich mit der angewandten Methodik durch Verwendung des neuen Gradientensammlers zum ersten Mal in größeren Mengen gewinnen, so daß die Restriktionskartierung, die Identifizierung und die Klonierung der rDNA sehr leicht möglich war.

Gesellschaft für Strahlen- und
Umweltforschung mbH (GSF)

Neuherberg, den 6.04.1987
PLA 8633 Ga/he

0247340

Patentansprüche:

1. Verfahren zur Isolierung von Makromolekülen, die in einem Dichtegradienten in Banden aufgetrennt wurden, mittels einer Abziehhilfe, die in den Bereich der jeweils abzutrennenden Bande in den Dichtegradienten verbracht wird, dadurch gekennzeichnet, daß die pipettenförmig ausgebildete Abziehhilfe (5) relativ zur Bande (15) bewegt wird und die Stellung der Abziehhilfe (5, 13, 14) bezüglich der Bande (15) optisch festgestellt wird.

2. Verfahren nach Anspruch 1, dadurch gekennzeichnet, daß die Abziehhilfe (5, 13, 14) markiert und die Lage der Markierung (14) optisch festgestellt wird.

3. Verfahren nach Anspruch 1 und 2, dadurch gekennzeichnet, daß die Markierung (14) mittels Strahlung zum Leuchten gebracht wird.

4. Verfahren nach Anspruch 1 bis 3, dadurch gekennzeichnet, daß als Strahlungen solche verwendet werden, die die Banden und die Markierung durch Fluoreszenzlicht oder anderes Licht sichtbar machen.

5. Vorrichtung zur Durchführung des Verfahrens nach Anspruch 1 bis 4, gekennzeichnet durch
a) einen höhenregulierbaren Niveautisch (2, 7) auf dem
b) der Dichtegradient    (4) aufrecht angeordnet ist,
c) eine positionierbare Pipette (5, 13) mit
d) einer Markierung (14), wobei die Pipette (5, 13) mit
e) einer Pipettierhilfe (6) in Verbindung steht.

0247340

6. Vorrichtung nach Anspruch 5, dadurch gekennzeichnet, daß die Markierung (14) an der Spitze (13) der Pipette (5) angeordnet ist.

7. Vorrichtung nach Anspruch 5 und 6, dadurch gekennzeichnet, daß die Markierung (14) aus einem Fluoreszenzfarbstoff oder einem anderen Farbstoff besteht.

Fig. 1

Fig. 2

Fig. 3a-c

a)  b)  c)

Fig. 4

Fig. 5

## 0247340

Europäisches
Patentamt

**EUROPÄISCHER RECHERCHENBERICHT**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 155 424 (G.D. SEARLE & CO.) * Seite 1, Zeilen 1-24; Seite 3, Zeile 3 - Seite 5, Zeile 6; Figur 1 * | 1,2,5 | G 01 N 27/26 B 01 L 3/02 B 01 D 43/00 B 01 D 21/32 |
| | --- | | |
| X | US-A-4 003 834 (D.H. COOMBS) * Zusammenfassung; Spalte 1, Zeile 11 - Spalte 2, Zeile 51 * | 1,2 | |
| | --- | | |
| A | US-A-4 346 608 (J.G. OLENICK et al.) * Zusammenfassung; Spalte 1, Zeile 12 - Spalte 2, Zeile 50 * | 1,2 | |
| | --- | | |
| A | US-A-4 577 514 (C.A. BRADLEY et al.) * Zusammenfassung; Spalte 1, Zeile 6 - Spalte 2, Zeile 53 * | 1,2,5 | RECHERCHIERTE SACHGEBIETE (Int. Cl.4) |
| | --- | | B 01 L G 01 N B 01 D |
| A | EP-A-0 028 842 (A. FERRANTE et al.) * Zusammenfassung; Seite 4, Zeilen 20-25; Seite 7, Zeilen 1-16 * | 1,2 | |
| | --- | | |
| A | EP-A-0 119 692 (TECHNICON INSTRUMENTS CORP.) * Zusammenfassung; Seite 13, Zeile 24 - Seite 14, Zeile 30 * | 1,2 | |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 17-09-1987 | VAN IDDEKINGE R.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82